# EUROPÄISCHE PATENTSCHRIFT

(11) **EP 1 475 469 B1**
(45) Veröffentlichungstag und Bekanntmachung des Hinweises auf die Patenterteilung: **05.03.2008**
(21) Anmeldenummer: 04010138.8
(22) Anmeldetag: 29.04.2004
(51) Int. Cl.: D04B 15/68

(54) **Strickmaschine, insbesondere Rundstrickmaschine, und dafür geeignete Steuerplatine**
Knitting machine, particularly circular knitting machine and corresponding steering sinker
Machine à tricoter, notamment machine à tricoter circulaire et platine de commande correspondante

(30) Priorität: 09.05.2003 DE 10321737
(43) Veröffentlichungstag der Anmeldung: 10.11.2004
(73) Patentinhaber: SIPRA Patententwicklungs- und Beteiligungsgesellschaft mbH, 72561 Albstadt (DE)
(72) Erfinder: Willmer, Rolf, Dipl-Ing., 72459 Albstadt (DE)
(74) Vertreter: Freiherr von Schorlemer, Reinfried

(56) Entgegenhaltungen:
- EP-A- 0 379 745
- EP-A- 0 545 485
- GB-A- 2 201 430
- US-A- 4 559 791

## Beschreibung

Die Erfindung betrifft eine Strickmaschine, insbesondere Rundstrickmaschine der im Oberbegriff des Anspruchs 1 angegebenen Gattung und eine dafür geeignete Steuerplatine.

Bei einer bekannten Rundstrickmaschine dieser Art (DE 35 22 042 A1) sind zur Realisierung der sog. Drei-Wege-Technik (Stricken, Fang, Nichtstricken) unterhalb der Strickwerkzeuge einerseits Zwischenstößer mit von diesen nach unten abstehenden Federelementen, andererseits unterhalb der Zwischenstößer angeordnete, als zweiarmige Hebel ausgebildete Steuerplatinen vorgesehen. Die Steuerplatinen können mit Hilfe von Auswählvorrichtungen, die eine Andrückkurve, zwei Steuermagnete und einen Haltemagneten aufweisen, derart betätigt werden, daß an den Federelementen angebrachte Füße wahlweise auf eine Strickkurve oder eine Fangkurve oder an diesen beiden Kurven vorbei in eine Durchlauf- bzw. Nichtstrickbahn geführt werden. Ein Vorteil dieser bekannten Auswählvorrichtung besteht darin, daß die Steuerplatinen an den Austriebsbewegungen der Strickwerkzeuge, Zwischenstößer und Federelemente nicht teilnehmen und die beiden Steuermagnete einer jeden Auswählvorrichtung daher in derselben, zu den Strickwerkzeugen senkrechten Ebene angeordnet werden können, die bei einer Rundstrickmaschine senkrecht zur Achse des Nadelzylinders angeordnet ist. Vorteilhaft ist auch, daß die Steuerplatinen stets in einer inaktiven Lage an den Steuermagneten anliegen, d. h. während ihrer Anlage an diesen keine Austriebsbewegungen erhalten, und daß vom ersten Steuermagneten nicht freigegebene Steuerplatinen durch den Haltemagneten in einer verschwenkten Lage gehalten werden, so daß sie vor dem Erreichen des zweiten Steuermagneten nicht noch einmal mit einer Andrückkurve betätigt werden müssen.

Die genannten Vorteile werden bei der bekannten Rundstrickmaschine dadurch erkauft, daß in jeder Nut des die Strickwerkzeuge aufnehmenden Bettes zusätzlich je ein Zwischenstößer, ein Federelement und eine Steuerplatine angeordnet sind, wodurch die auf diese Teile einwirkende Schloßanordnung eine vergleichsweise große Bauhöhe besitzt. Das ist insbesondere bei Auswählvorrichtungen für die Rippnadeln von Rundstrickmaschinen unerwünscht, bei denen das Rippschloß in radialer Richtung möglichst kurz sein sollte, aber auch bei der Steuerung der Zylindernadeln nicht vorteilhaft. Abgesehen davon bringen drei zusätzlich zu den Strickwerkzeugen vorgesehene Bauelemente einen hohen Fertigungsaufwand und eine Reduzierung der Betriebssicherheit mit sich. Schließlich führen der Schloßausbau und die Auswählvorrichtungen der bekannten Strickmaschine zu einer vergleichsweise großen, in Bewegungsrichtung des Bettes bzw. der Schloßanordnung gemessenen Breite der Stricksysteme, da die mit dem zweiten Steuermagneten vorzunehmende Auswahl erst dann durchgeführt werden kann, wenn die Austriebsfüße der Federelemente an der Strickkurve vorbei bewegt worden und in einem Zwischenraum zwischen dieser und der Fangkurve angeordnet sind.

Ähnliche Probleme ergeben sich bei bekannten Strickmaschinen (DE 42 17 419 C1), bei denen die Steuerplatinen aus verschiebbar in schwenkbaren Musterplatinen gelagerten Elementen bestehen und die Musterplatinen mit unterhalb der Strickwerkzeuge angeordneten Stößern gekoppelt sind.

Bei einer anderen bekannten Strickmaschine (DE 21 55 251 A1) erfolgt die Auswahl für Stricken, Fang und Nichtstricken dadurch, daß unter den Strickwerkzeugen angeordnete Musterstößer mit Hilfe von zwei an derselben Stelle angeordneten Steuermagneten wahlweise in eine von zwei möglichen Schwenkstellungen gebracht oder in einer Mittellage gehalten werden. Dazu ist es erforderlich, die Musterfüße mit Hilfe geeigneter Polflächen aus ihrer Mittellage heraus zu verschwenken, was zu Musterfehlern führen kann. Außerdem sind die in der Mittellage befindlichen Musterstößer im Bereich der Auswählstelle nicht zwangsgeführt, so daß sie aufgrund von Vibrationen od. dgl. ungewollte Schwenkbewegungen ausführen und dadurch Bruch zur Folge haben können. Den möglichen Vorteilen der Anlage der Musterstößer an den Steuermagneten in einer inaktiven Lage, des Wegfalls von Andrückschloßteilen, einer geringeren Anzahl von Bauteilen und einer Reduzierung der Bauhöhe des Schloßes steht hier der Nachteil einer so geringen Betriebssicherheit gegenüber, daß die Auswählvorrichtungen zumindest nicht für kleine Teilungen (Nadelabstände) und hohe Relativgeschwindigkeiten zwischen Bett und Schloß geeignet sind.

Daneben sind Strickmaschinen bekannt (z. B. EP 0 138 696 B1), die anstelle der elektromagnetischen Auswahl eine mechanische Auswahl vorsehen. Unterhalb der Strickwerkzeuge sind hier je zwei Austriebsfüße aufweisende Zwischenstößer und mit diesen schwenkbar gekoppelte Musterplatinen angeordnet, die durch Vorspannfedern in Richtung einer mechanischen Auswählvorrichtung vorgespannt sind. Die Auswählvorrichtungen sind wahlweise mit hohen, tiefen oder gar keinen, radial wirkenden Steuerkurven versehen, um die vorbeilaufenden Musterplatinen und mit ihnen die Zwischenstößer in eine von drei möglichen Schwenkstellungen zu verschwenken. Dadurch ist es möglich, wahlweise einen unteren Austriebsfuß auf eine Strickkurve oder einen oberen Austriebsfuß auf eine Fangkurve einer Schloßanordnung zu lenken oder beide Füße aus dem Bereich dieser Schloßkurven herauszuschwenken, damit zugeordnete Strickwerkzeuge eine Nichtstrickbahn durchlaufen. Dem Nachteil der geringen Mustermöglichkeiten, die keine individuelle Auswahl der Strickwerkzeuge zulassen, und der auch bei dieser Strickmaschine vergleichsweise großen Bauhöhe des Schloßes steht hier der Vorteil gegenüber, daß die Strick- und Fangkurven unmittelbar übereinander liegen können und die Breite eines Stricksystems daher im wesentlichen nur von der Breite der zum Verschwenken der Musterplatinen benötigten Steuerkurven abhängt. Eine unmittelbare Übertragung dieser Technik auf elektromagnetische Auswählvorrichtungen würde an den genannten Nachteilen wenig ändern.

Schließlich sind Strickmaschinen mit Auswählvorrichtungen bekannt (DE 197 43 814 A1), die zur Verschwenkung von Steuerplatinen bestimmt sind und erste, eine Auswahl zwischen Austrieb und Nichtaustrieb (Nichtstricken) ermöglichende Steuermagnete und zweite, eine Auswahl zwischen Fang und Stricken ermöglichende Steuermagnete aufweisen. Hierbei müssen allerdings entweder die zweiten Steuermagnete in einer Höhe angeordnet werden, die der für den Austrieb ausgewählten Fanghöhe der Steuerplatinen entspricht, oder die Steuerplatinen müssen eine solche Länge aufweisen, daß sich ihre mit den Steuermagneten wechselwirkenden Ankerflächen auch nach dem Austrieb in die Fangstellung noch im Wirkungsbereich des in derselben Ebene wie der erste Steuermagnet liegenden zweiten Steuermagneten befinden. Beides ist mit einer unerwünschten Vergrößerung der Bauhöhe verbunden. Außerdem werden die Steuerplatinen hier in einer aktiven Lage so an die Steuermagnete herangeführt, daß sie bei in Anlage an den Steuermagneten befindlichen Zuständen ausgetrieben werden, was zur Vermeidung eines frühzeitigen Verschleißes der Magnetpolflächen nicht erwünscht ist. Schließlich wäre es für eine leichtgängige Verschwenkung der Steuerplatinen aus der Fangstellung heraus erforderlich, besondere Maßnahmen vorzusehen (z. B. DE 40 07 253 A1), was ebenfalls nicht immer erwünscht ist.

Ausgehend von diesem Stand der Technik liegt der vorliegenden Erfindung das technische Problem zugrunde, die Strickmaschine der eingangs bezeichneten Gattung unter weitgehender Vermeidung der geschilderten Nachteile so auszubilden, daß sie die ebenfalls geschilderten Vorteile weitgehend in sich vereinigt. Insbesondere soll die erfindungsgemäße Strickmaschine eine elektromagnetische Musterung nach der Drei-Wege-Technik und dennoch eine geringe Bauhöhe der Schloßanordnung, eine geringe Breite der Auswählvorrichtungen (Systembreite), die Anwendung nur weniger Bauteile und eine Anlage der Steuerplatinen an den Steuermagneten in inaktiven Zuständen ermöglichen. Außerdem soll eine für diesen Zweck geeignete Steuerplatine geschaffen werden.

Zur Lösung dieses Problems dienen die Merkmale der Ansprüche 1 und 12.

Die Erfindung bringt den Vorteil mit sich, daß aufgrund der Anwendung von zwei Füßen pro Steuerplatine trotz einer Neben- bzw. Hintereinanderanordnung der Steuermagnete eine vergleichsweise geringe Breite der Auswählvorrichtungen erzielt wird. Da ferner die Steuerplatine selbst und nicht ein mit ihr zusammenwirkendes Teil mit den Antriebsfüßen versehen ist, sind keine zusätzlichen Bauteile erforderlich, was sich günstig auf die Bauhöhe der Schloßanordnung auswirkt. Außerdem liegen die Steuerplatinen stets nur in inaktiven Zuständen an den Steuer- und Haltemagneten an.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 einen schematischen Vertikalschnitt durch eine erfindungsgemäße Rundstrickmaschine etwa längs der Linie I - I der Fig. 2;
Fig. 2 eine schematische Ansicht von innen auf eine Schloßanordnung der Rundstrickmaschine nach Fig. 1; und
Fig. 3 bis 5 der Fig. 1 entsprechende Schnitte längs der Linien III - III bis V - V der Fig. 2.

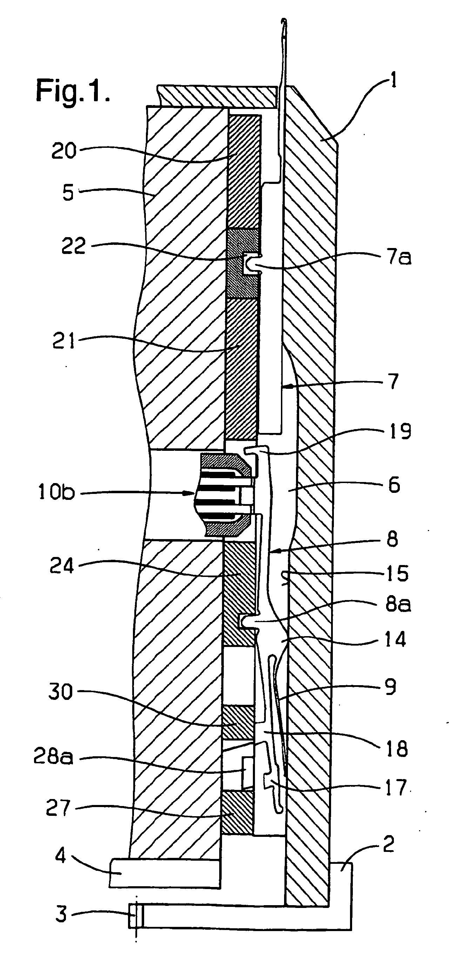

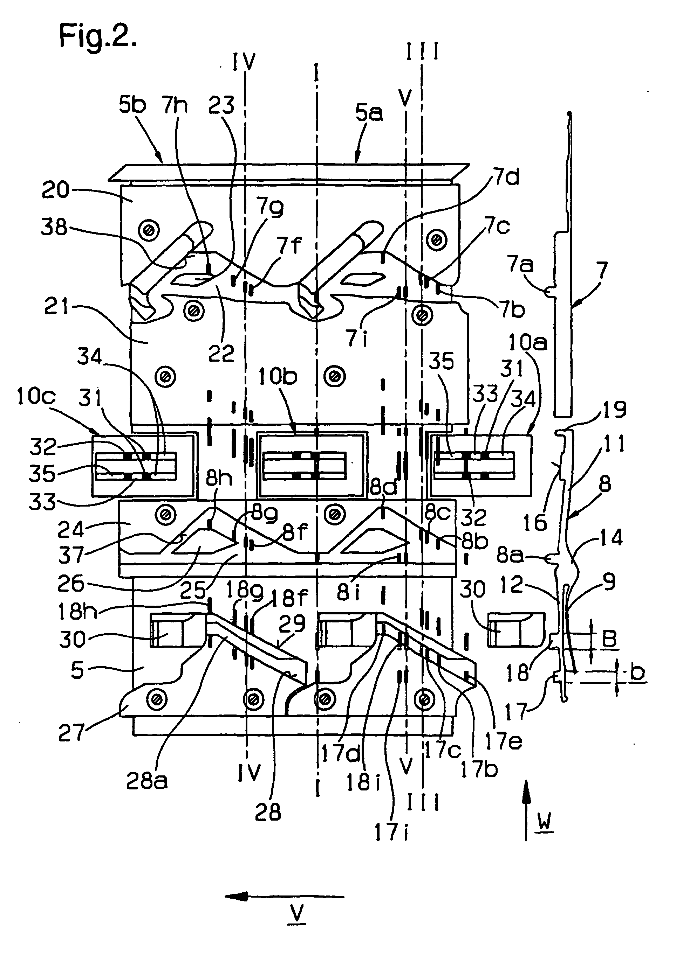

Fig. 1 zeigt eine Rundstrickmaschine mit einem Bett 1 in Form eines üblichen Nadelzylinders, der auf einem Tragring 2 befestigt ist. Dieser ist in einem nicht dargestellten Maschinengestell drehbar gelagert und mit einem äußeren Zahnkranz 3 versehen, der mit einem nicht dargestellten Antriebszahnrad verbunden ist, das von einem Antriebsmotor angetrieben werden kann. An einer stationär am Maschinengestell gelagerten, nicht dargestellten Schloßplatte ist ein Tragring 4 montiert, an dem ein Schloß befestigt ist, das einen den Nadelzylinder umgebenden Schloßträger 5 aufweist, der an seiner Innenseite eine Vielzahl von Schloßabschnitten 5a, 5b (Fig. 2) trägt, die in Umfangsrichtung des Betts 1 nebeneinander angeordnet sind und Stricksysteme bilden.

Das Bett 1 weist eine Vielzahl von durch Stege 6 gebildeten Nuten auf, die hier parallel zur Drehachse des Betts 1 bzw. Nadelzylinders angeordnet sind und Strickwerkzeuge 7 aufnehmen, die hier z. B. als übliche Zungennadeln ausgebildet sind. Jedem Strickwerkzeug 7 ist eine unterhalb von diesem und in derselben Nut des Betts 1 angeordnete Steuerplatine 8 zugeordnet. Im Ausführungsbeispiel sind die Strickwerkzeuge 7 parallel zur Drehachse verschiebbar in den Nuten angeordnet, während die Steuerplatinen 8 sowohl parallel zur Drehachse verschiebbar als auch radial zu dieser verschwenkbar in den Nuten gelagert sind.

Die Strickwerkzeuge 7 und Steuerplatinen 8 weisen insbesondere zu ihrem Abzug bestimmte Füße 7a bzw. 8a auf, denen in einer weiter unten beschriebenen Weise insbesondere Abzugsteile des Schloßes zugeordnet sind. Die Steuerplatinen 8 sind außerdem mit an ihnen befestigten oder mit ihnen aus einem Stück hergestellten Vorspannfedern 9 versehen, mittels derer sie in radialer Richtung vorgespannt sind.

Wie insbesondere Fig. 2 zeigt, ist jedem Schloßabschnitt 5a, 5b eine Auswählvorrichtung 10a, 10b zugeordnet, die dem Zweck dient, die Strickwerkzeuge 7 bei der Durchführung von Relativbewegungen zwischen dem Bett 1 und dem Schloßträger 5 wahlweise eine Strick-, Fang- oder Nichtstrick- bzw. Durchlaufbahn durchlaufen zu lassen.

Rundstrickmaschinen dieser Art sind z. B. aus den Dokumenten DE 35 22 042 A1, DE 37 12 673 C1 und DE 40 07 253 C2 allgemein bekannt, die zur Vermeidung von Wiederholungen hiermit durch Referenz zum Gegenstand der vorliegenden Offenbarung gemacht werden.

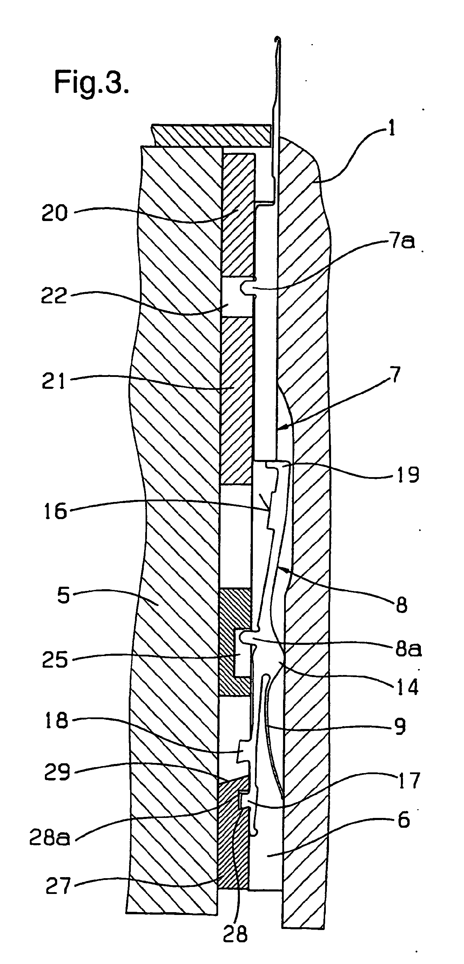

Erfindungsgemäß bestehen die Steuerplatinen 8, wie Fig. 1 und 2 zeigen, aus doppelarmigen Hebeln, die erste Hebelarme 11 und zweite Hebelarme 12 aufweisen. Zwischen den Hebelarmen 11 und 12 sind abgerundete Lagerstellen 14 vorgesehen, mittels derer die Steuerplatinen 8 an Böden 15 (Fig. 1) der Nuten des Betts 1 abgestützt werden. Dabei ist die Anordnung im Ausführungsbeispiel so, daß der erste Hebelarm 11 mit einer radial nach außen weisenden Ankerfläche 16 (Fig. 2) versehen ist, der Fuß 8a etwa in Höhe der Lagerstelle 14 liegt und der zweite Hebelarm 12 zwei übereinander angeordnete Austriebsfüße 17 und 18 aufweist, die wie der Fuß 8a radial nach außen ragen. An einem oberen Ende der Steuerplatine 8 ist außerdem ein Stützfuß 19 ausgebildet, der mit dem darüber liegenden Strickwerkzeug 7 zusammenwirkt. Die Vorspannfeder 9 ist auf einer dem Boden 15 der zugehörigen Nut zugewandten Rückseite der Steuerplatine 8 und so angeordnet, daß die Steuerplatine 8 zwei bevorzugte radiale Schwenkstellungen einnehmen kann. Bei im wesentlichen entspannter Vorspannfeder 9 ist die Steuerplatine 8 um die Lagestelle 14 so verschwenkt, daß ihr oberer, erster Hebelarm 11 am Boden 15 der zugehörigen Nut anliegt und daher die Ankerfläche 16 in die Nut zurückgezogen ist, wie z. B. Fig. 3 zeigt, während gleichzeitig der untere, zweite Hebelarm 12 durch die am Boden 15 der Nut abgestützte Vorspannfeder 9 radial nach außen vorgespannt ist, so daß die Austriebsfüße 17, 18 aus der Nut radial nach außen ragen. In der anderen bevorzugten Schwenkstellung ist dagegen, wie Fig. 1 zeigt, umgekehrt der erste Hebelarm 11 nach außen und der zweite Hebelarm 12 unter Spannung der Vorspannfeder 9 nach innen geschwenkt, so daß die Ankerfläche 16 radial aus der Nut nach außen ragt und die Austriebsfüße 17, 18 in die betreffende Nut zurückgezogen sind. Entsprechende Stellungen können alle vorhandenen Steuerplatinen 8 einnehmen.

Die beschriebenen Steuerplatinen 8 einschließlich der Füße 8a, 17 und 18 sowie der Vorspannfedern 9 werden vorzugsweise in einem Stück hergestellt.

Die insbesondere aus Fig. 2 ersichtlichen Schloßabschnitte 5a, 5b sind im wesentlichen identisch ausgebildet. Zur Vereinfachung der Darstellung ist der linke Schloßabschnitt 5b überwiegend mit den die Schloßteile kennzeichnenden Bezugszeichen und der rechte Schloßabschnitt 5a überwiegend mit Bezugszeichen versehen, die verschiedene Füße der Strickwerkzeuge 7 und Steuerplatinen 8 kennzeichnen.

Nach Fig. 2 sind den Füßen 7a der Strickwerkzeuge 7 in jedem Schloßabschnitt bzw. System 5a, 5b zwei übereinander liegende Schloßteile 20, 21 zugeordnet, die zwischen sich eine Aussparung 22 freilassen, die in einem mittleren Bereich mit einem Trennschloßteil 23 versehen ist. In einem unter dem Schloßteil 21 liegenden Bereich der Schloßabschnitte 5a, 5b ist jeweils eine der Auswählvorrichtungen 10a, 10b angeordnet, die am Eingang zum jeweiligen Schloßabschnitt 5a, 5b angeordnet sind. Dabei wird unter "Eingang" der zuerst von den Strickwerkzeugen 7 und Steuerplatinen 8 erreichte Anfang des betreffenden Schloßabschnitts 5a, 5b verstanden, wenn sich diese in Richtung eines Pfeils v (Fig. 2) relativ zum Schloß bewegen. Weiterhin weisen die Schloßabschnitte 5a, 5b unmittelbar unter den Auswählvorrichtungen 10a, 10b ein den Füßen 8a der Steuerplatinen 8 zugeordnetes Schloßteil 24 auf, das analog zu den Schloßteilen 20, 21 mit einer Aussparung 25 und einem Trennschloßteil 26 versehen ist. Schließlich ist unterhalb der Schloßteile 24 noch je ein den Austriebsfüßen 17, 18 der Steuerplatinen 8 zugeordnetes Schloßteil 27 vorhanden. Dieses besitzt eine Strickkurve 28 und eine Fangkurve 29. Die Strickkurve 28 besteht hier aus der einen Seitenkante einer Nut 28a, die von der den Füßen 17, 18 zugewandten Innenfläche her in das Schloßteil 27 eingearbeitet ist. Sie dient zur Zusammenwirkung mit den unteren Austriebsfüßen 17 und treibt die auf sie auflaufenden Austriebsfüße 17 in eine Strickstellung aus. Die Fangkurve 29 besteht dagegen hier aus einer zur Strickkurve 28 im wesentlichen parallelen, äußeren Kante des Schloßteils 27. Die Fangkurve 29 dient zur Zusammenwirkung mit den oberen Austriebsfüßen 18 und treibt die auf sie auflaufenden Austriebsfüße 18 bis eine Fangstellung aus. Die Strickkurve 28 und die Fangkurve 29 liegen vorzugsweise zumindest teilweise übereinander.

Damit an allen Eingängen zu den Schloßabschnitten 5a, 5b gleiche Schwenkstellungen der Steuerplatinen 8 erhalten werden, ist vor dem Eingang zu jedem Schloßabschnitt 5a, 5b je ein auch aus Fig. 1 ersichtliches Andrückteil 30 vorgesehen, das in radialer Richtung von außen nach innen auf die oberen Austriebsfüße 18 einwirkt und alle vorbeilaufenden Steuerplatinen 8 unabhängig von deren Verhalten im vorhergehenden Systemabschnitt in eine Stellung verschwenkt, in der der untere Hebelarm 12 in die betreffende Nut des Betts 1 zurückgeschwenkt ist (Fig. 1).

Die Auswählvorrichtungen 10a und 10b sowie eine dritte in Fig. 2 dargestellte Auswählvorrichtung 10c enthalten gemäß Fig. 2 je zwei in Laufrichtung der Strickwerkzeuge 7 (Pfeil v) hintereinander angeordnete Steuermagnete 31, 32 und einen dazwischen liegenden, die Polflächen der beiden Steuermagnete 31, 32 bündig verbindenden Haltemagneten 33 auf. Vor dem ersten Steuermagneten 31 ist vorzugsweise ein weiterer Haltemagnet 34 angeordnet. Schließlich weist jede Auswählvorrichtung 10a, b, c noch einen in Laufrichtung hinter dem zweiten Steuermagneten 32 angeordneten dritten Haltemagneten 35 auf.

Im übrigen sind die verschiedenen Schloßteile und Auswählvorrichtugnen in Fig. 2 so eingerichtet und relativ zueinander angeordnet, daß sich die nachfolgend beschriebene Funktionsweise für die beschriebene Rundstrickmaschine ergibt.

Es sei angenommen, daß das Bett bzw. der Nadelzylinder 1 so in Umdrehungen versetzt wird, daß die in seinen Nuten gelagerten Strickwerkzeuge 7 und Steuerplatinen 8 quer zur Drehachse in Richtung des Pfeils v in Fig. 2 bewegt werden. Beim Einlaufen einer Steuerplatine 8 in den Systemabschnitt 5a gelangt diese zunächst in den Wirkungsbereich der Andrückkurve 30, die gemäß Fig. 1 so auf ihren oberen Austriebsfuß 18 drückt, daß dieser radial in die zugehörige Nut des Betts 1 verschwenkt und gleichzeitig die Ankerfläche 16 an den ersten Haltemagneten 34 der Auswählvorrichtung 10a angelegt wird, wie in Fig. 1 für die Auswählvorrichtung 10b gezeigt ist. Beim Weitertransport wird die Steuerplatine 8 in dieser Schwenklage gehalten, bis ihre Ankerfläche 16 den ersten Steuermagneten 31 erreicht.

Wird der Steuermagnet 31 so gesteuert, daß er die Ankerfläche 16 nicht anzieht, sondern die Steuerplatine 8 freigibt bzw. losläßt, dann wird diese unter dem Einfluß der Vorspannfeder 9 um die Lagerstelle 14 so verschwenkt, daß ihre am zweiten Hebelarm 12 angebrachten Austriebsfüße 17, 18 radial nach außen bewegt werden und aus der betreffenden Nut des Betts 1 radial heraustreten. Sie gelangen dann beim weiteren Transport in Richtung des Pfeils v in den Wirkungsbereich der Strickkurve 28, da diese, in Richtung des Pfeils v betrachtet, etwas früher als die Fangkurve 29 beginnt. Infolgedessen läuft der untere Austriebsfuß 17 auf die Strickkurve 28 auf (Fig. 3), so daß die zugehörige Steuerplatine 8 senkrecht zum Pfeil v und parallel zur Drehachse des Nadelzylinders (Pfeil w in Fig. 2) ausgetrieben wird. Dadurch legt sich ihr Stützfuß 19 gegen die Unterkante des zugeordneten Strickwerkzeugs 7, so daß dieses ebenfalls in Richtung des Pfeils w ausgetrieben wird. Dabei ist die Strickkurve 28 in Richtung des Pfeils v so ausgebildet und so lang, daß zunächst die Füße 8a der Steuerplatine 8 in die Aussparung 25 des Schloßteils 24 gelangen und dann über das Trennschloßteil 26 gehoben werden, während kurz danach die Füße 7a der Strickwerkzeuge 7 in die Aussparung 22 eingeführt und dann über das Trennschloßteil 23 gehoben werden. Schließlich wird das Strickwerkzeug 7 bis in seine höchste, der Strickstellung entsprechende Stellung angehoben. Dies ist in Fig. 2 durch als Karos dargestellte Fußstellungen 17b, 17c, 17d bzw. 8b, 8c, 8d bzw. 7b, 7c, 7d angedeutet.

Wird der erste Steuermagnet 31 dagegen so gesteuert, daß er die Ankerfläche 16 auch weiterhin anzieht, dann gelangt diese auf den nachfolgenden Haltemagneten 33, so daß die Steuerplatine 8 in der aus Fig. 1 ersichtlichen Schwenkstellung verbleibt und in dieser Schwenkstellung an den zweiten Steuermagneten 32 herangeführt wird.

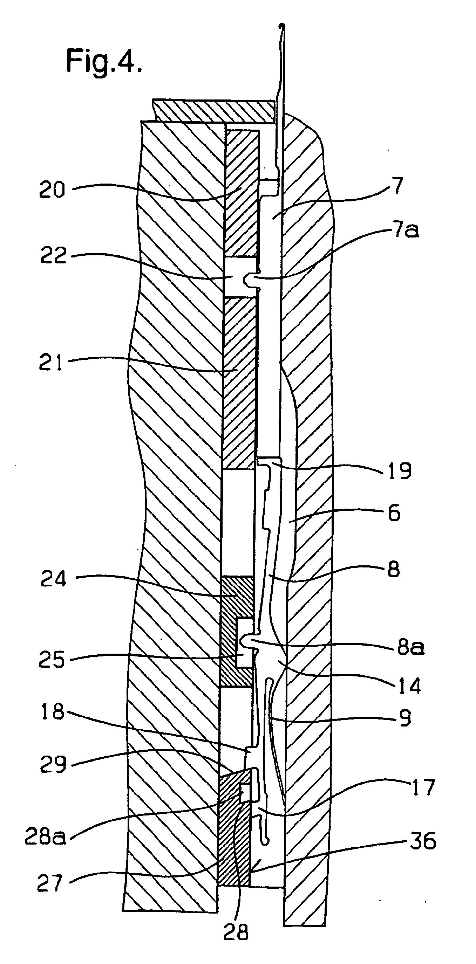

Wird der zweite Steuermagnet 32 zu diesem Zeitpunkt so gesteuert, daß er die Ankerfläche 16 nicht anzieht, sondern die Steuerplatine 8 freigibt, dann wird diese unter dem Einfluß der Vorspannfeder 9 um die Lagerstelle 14 so verschwenkt, daß ihre am zweiten Hebelarm 12 angebrachten Austriebsfüße 17, 18 radial nach außen geschwenkt werden. Da jedoch ihr unterer Austriebsfuß 17, wie in Fig. 2 durch einen Fuß 17e angedeutet ist, in dieser Stellung gerade den vordersten ansteigenden Teil der Strickkurve 28 passiert hat, legt sich dieser Austriebsfuß 17 gegen eine ihm zugewandte Innenfläche 36 (Fig. 4) des Schloßteils 27, ohne auf die Strickkurve 28 aufzulaufen bzw. in die entsprechende Nut 28a des Schloßteils 27 einzutreten.

Stattdessen gelangt im weiteren Verlauf der Austriebsfuß 18 dieser Steuerplatine 8 in den Wirkungsbereich der Fangkurve 29, die kurz hinter der Strickkurve 28 beginnt. Die Fangkurve 29 hebt den Austriebsfuß 18 daher bis in eine Fangstellung an, was zur Folge hat, daß der Stützfuß 19 der betreffenden Steuerplatine 8 auch das zugeordnete Strickwerkzeug 7 in eine Fangstellung austreibt, wobei die Füße 8a und 7a wie im zuerst beschriebenen Fall über die Teilerspitzen der Trennschloßteile 26 bzw. 23 gehoben werden. Dies ist in Fig. 2 durch Fußstellungen 18f, 18g, 18h bzw. 8f, 8g, 8h bzw. 7f, 7g, 7h angedeutet.

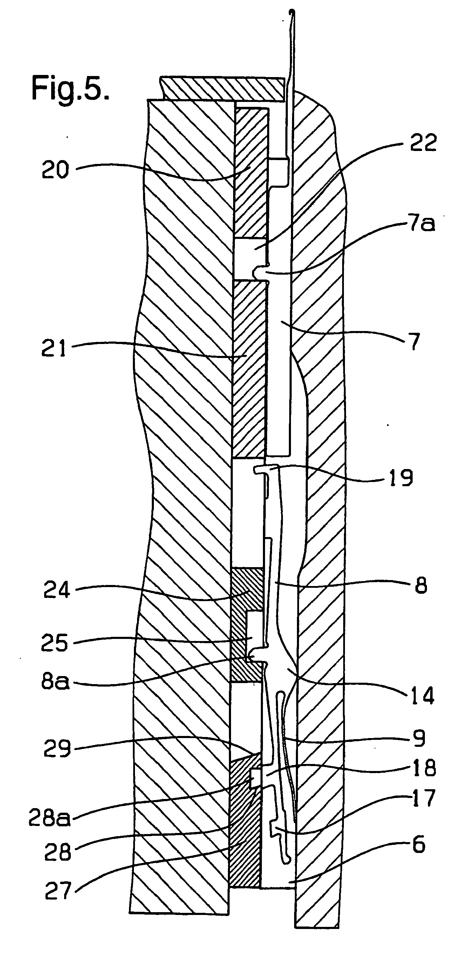

Wird der zweite Steuermagnet 32 dagegen so gesteuert, daß er die Ankerfläche 16 auch weiterhin anzieht, dann gelangt diese auf den nachfolgenden Haltemagneten 35, so daß die Steuerplatine 8 auch hier in einer aus Fig. 1 ersichtlichen Schwenkstellung verbleibt und in dieser Schwenkstellung an der Fangkurve 29 vorbeibewegt wird (Fig. 5), ohne von dieser angehoben zu werden, bis er sicher hinter der Innenfläche 36 liegt. Derart gesteuerte Steuerplatinen 8 werden daher nicht ausgetrieben, sondern durchlaufen eine Nichtstrickbahn, wie in Fig. 2 durch Fußstellungen 17i, 18i, 8i und 7i angedeutet ist. Die Füße 8a und 7a werden dabei unterhalb der Trennschloßteile 26, 23 bewegt, um eine sichere Trennung von den ausgetriebenen Steuerplatinen 8 und Strickwerkzeugen 7 zu gewährleisten.

Nach vollendeter Sortierung der Strickwerkzeuge 7 in Strick-, Fang- bzw. Nichtstrickstellungen werden alle Steuerplatinen 8 durch eine auf ihre Füße 8a wirkende Abzugskurve 37 und alle Strickwerkzeuge 7 durch eine auf ihre Füße 7a wirkende Abzugskurve 38 wieder in die Ausgangssstellung nach Fig. 1 abgezogen, so daß im nachfolgenden Schloßabschnitt bzw. System ein neuer Auswählvorgang beginnen kann.

Bei der beschriebenen Auswählvorrichtung können die beiden Steuermagnete 31, 32 sowohl dicht nebeneinander als auch in derselben, senkrecht zu den Strickwerkzeugen 7 bzw. zur gedachten Drehachse des Nadelzylinders angeordneten Ebene liegen. Letzteres gilt insbesondere deshalb, weil sich die Steuerplatinen 8 beim Erreichen des zweiten Steuermagneten 32 in einer noch nicht ausgetriebenen Stellung befinden können (Fig. 2). Wegen des Vorhandenseins der zwei Austriebsfüße 17, 18 pro Steuerplatine 8 kann die mit dem zweiten Steuermagneten 32 vorzunehmende Auswahl bereits dann erfolgen, wenn der untere Austriebsfuß 17 entsprechend Fig. 4 gerade von der Innenfläche 36 des Schloßteils 27 abgedeckt wird und nicht mehr auf die Strickkurve 28 auflaufen kann. Daher können auch die Strick- und Fangkurven 28 und 29, wie Fig. 2 zeigt, vorzugsweise so dicht nebeneinander bzw. übereinander, d. h. miteinander verschachtelt angeordnet werden, daß die Fangkurve 29, in Richtung des Pfeils v betrachtet, nur wenig später als die Strickkurve 28 beginnt. Als Folge davon können die gesamten Auswählvorrichtungen in Richtung des Pfeils v vergleichsweise schmal ausgebildet und die Zahl der am Umfang einer Rundstrickmaschine unterbringbaren Systeme merklich vergrößert werden. Außerdem kann die Höhe des zugehörigen Schloßabschnitts 5a bzw. 5b wegen der Anwendung nur einer Steuerplatine 8 in Richtung des Pfeils w vergleichsweise niedrig ausgebildet werden, was den Platzbedarf für das Schloß wesentlich verringert.

Um sicherzustellen, daß der obere Austriebsfuß 18 stets von der Fangkurve 29 erfaßt wird, auch wenn der untere Austriebsfuß 17 an der Innenfläche 36 des Schloßteils 27 anliegt (Fig. 4), ist seine senkrecht zur Längsachse der Steuerplatine 8 bzw. in Richtung des Pfeils v gemessene radiale Höhe vorzugsweise entsprechend größer als die in derselben Richtung gemessene Höhe des unteren Austriebsfußes 17 (Fig. 2 und 4). Der obere Austriebsfuß 18 steht dann radial um so viel über den unteren Austriebsfuß 17 vor, daß er die Fangkurve 29 auch sicher übergreift, wenn der untere Austriebsfuß 17 an der Innenfläche 36 anliegt (Fig. 4).

Die parallel zur Längsachse der Steuerplatinen 8 bzw. in Richtung des Pfeils w gemessenen Abstände der beiden Austriebsfüße 17 und 18 voneinander sind vorzugsweise größer, als dem größten Abstand der Strick- und Fangkurven 28, 29 in dieser Richtung entspricht. Dadurch wird sichergestellt, daß beim Auflaufen des oberen Austriebsfußes 18 auf die Fangkurve 29 unter keinen Umständen gleichzeitig der untere Austriebsfuß 17 auf die Strickkurve 28 auflaufen und dadurch den Austrieb in die Fangstellung verhindern kann.

Nach einem besonders bevorzugten Ausführungsbeispiel der Erfindung ist die in Richtung der Längsachse der Steuerplatinen 8 bzw. in Fig. 2 parallel zum Pfeil w gemessene Breite B des oberen Austriebsfußes 18 größer als die entsprechend gemessene Breite b des anderen Austriebsfußes 17. Insbesondere ist der Austriebsfuß 18 mindestens genau so breit bzw. breiter als die parallel zum Pfeil w gemessene größte Breite der Nut 28a. Diese Maßnahme dient dem Zweck, ein Eintreten des oberen Austriebsfußes 18 in die Nut 28a bzw. ein Auflaufen auf die Strickkurve 28 in jedem denkbaren Betriebszustand zu verhindern (Fig. 5). Dadurch wird insbesondere sichergestellt, daß der obere Austriebsfuß 18 einer für die Nichtstrickstellung ausgewählten Steuerplatine 8 auch dann, wenn er gerade die Nut 28a passiert, nicht ungewollt auf die Strickkurve 28 gelangen kann, sondern aufgrund seiner größeren Breite B von dieser fern gehalten wird (Fig. 5). Daher sind keine zusätzlichen Maßnahmen erforderlich, um diesen Zweck zu erfüllen.

Im übrigen ist klar, daß die Erfindung nicht nur die beschriebene Strickmaschine, sondern die Auswählvorrichtung selbst und die erfindungsgemäß gestaltete Steuerplatine 8 umfaßt.

Die Erfindung ist nicht auf das beschriebene Ausführungsbeispiel beschränkt, das auf vielfache Weise abgewandelt werden kann. Beispielsweise wäre es denkbar, das Andrückteil 30 auf einen anderen Abschnitt der Steuerplatine 8 als den oberen Austriebsfuß 18 einwirken zu lassen. Die Ankerfläche 16 muß nicht ein besonderes Teil der Steuerplatine 8 darstellen, da die gesamte vordere, der Auswählvorrichtung zugewandte Stirnfläche des ersten Hebelarms 11 als Ankerfläche 16 nutzbar ist. Weiter können die Auswählvorrichtungen und insbesondere die Steuer- und Haltemagnete 31 bis 35 anders ausgebildet sein, als in Fig. 2 schematisch dargestellt ist. Dabei können die Steuer- und Haltemagnete, wie an sich bekannt ist, wahlweise als reine Elektromagnete, reine Permanentmagnete oder Kombinationen davon ausgebildet und mit entsprechenden, insbesondere aus gehärteten Materialien bestehenden Polflächen für die Ankerflächen 16 versehen sein. Auch die Schloßteile 27 und die an ihnen ausgebildeten Kurven 28, 29 können anders als beschrieben, insbesondere auch mehrteilig ausgebildet sein, wenn auch die einteilige Ausbildung wegen des geringeren Raumbedarfs und der geringeren Fertigungs- und Montagekosten als am besten angesehen wird. Außerdem ist die Erfindung nicht auf die nur beispielhaft beschriebene Rundstrickmaschine und die Anwendung von Strickwerkzeugen in Form von Zungennadeln beschränkt, sondern auch auf andere Strickmaschinen, insbesondere Rundstrickmaschinen mit stationären Nadelzylindern und drehbaren Schlössern oder Flachstrickmaschinen, sowie auf andere Strickwerkzeuge wie z. B. mustergemäß auswählbare Platinen oder Plüschhaken anwendbar. Schließlich versteht sich, daß die verschiedenen Merkmale auch in anderen als den beschriebenen und dargestellten Kombinationen angewendet werden können.

## Patentansprüche

1. Strickmaschine, enthaltend: wenigstens ein mit Nuten versehenes Bett (1); in den Nuten verschiebbar gelagerte Strickwerkzeuge (7); in den Nuten verschiebbar und verschwenkbar gelagerte Steuerplatinen (8) und zu deren Vorspannung bestimmte Vorspannfedern (9), wobei die Steuerplatinen (8) den Strickwerkzeugen (7) einzeln zugeordnet und als zweiarmige, je einen ersten und einen zweiten Hebelarm (11, 12) aufweisende Hebel ausgebildet sind; wenigstens einen relativ zum Bett (1) bewegbaren Schloßabschnitt (5a, 5b) mit einem zur Einwirkung auf die Steuerplatinen (8) bestimmten Andrückteil (30), einer Strickkurve (28) und einer in Bewegungsrichtung hinter der Strickkurve (28) beginnenden Fangkurve (29); und wenigstens eine zur Steuerung der Steuerplatinen (8) bestimmte Auswählvorrichtung mit wenigstens einem ersten, der Strickkurve (28) zugeordneten Steuermagneten (31), einem zweiten, der Fangkurve (29) zugeordneten Steuermagneten (32) und einem zwischen den beiden Steuermagneten (31, 32) angeordneten Haltemagneten (33); wobei die Anordnung so getroffen ist, daß bei der Durchführung von Relativbewegungen zwischen dem Bett (1) und dem Schloß die ersten Hebelarme (11) der Steuerplatinen (8) zunächst durch das Andrückteil (30) und gegen die Kraft der Vorspannfedern (9) dem ersten Steuermagneten (31) zugeführt und dann von diesem wahlweise festgehalten oder freigegeben werden, um den freigegebenen Steuerplatinen (8) zugeordnete Strickwerkzeuge (7) zum Stricken auszuwählen, während die ersten Hebelarme (11) der festgehaltenen Steuerplatinen (8) durch den Haltemagneten (33) weiter festgehalten, zum zweiten Steuermagneten (32) geführt und dann von diesem wahlweise festgehalten oder freigegeben werden, um den freigegebenen Steuerplatinen (8) zugeordnete Strickwerkzeuge (7) für Fang und den festgehaltenen Steuerplatinen (8) zugeordnete Strickwerkzeuge (7) zum Nichtstricken auszuwählen, **dadurch gekennzeichnet, daß** die zweiten Hebelarme (12) der Steuerplatinen (8) mit je einem zum Auflaufen auf die Strickkurve (28) bestimmten unteren Austriebsfuß (17) und einem zum Auflaufen auf die Fangkurve (29) bestimmten oberen Austriebsfuß (18) versehen sind.

2. Strickmaschine nach Anspruch 1, **dadurch gekennzeichnet, daß** der obere Austriebsfuß (18) höher als der untere Austriebsfuß (17) ist.

3. Strickmaschine nach Anspruch 1 oder 2, **dadurch gekennzeichnet, daß** sie mit einem Mittel zur Verhinderung des Auflaufens des oberen Austriebsfußes (18) auf die Strickkurve (28) versehen ist.

4. Strickmaschine nach einem der Ansprüche 1 bis 3, **dadurch gekennzeichnet, daß** die Fangkurve (29) zumindest teilweise über der Strickkurve (28) liegt und durch eine Nut (28a) von dieser getrennt ist.

5. Strickmaschine nach Anspruch 4, **dadurch gekennzeichnet, daß** das Mittel darin besteht, daß die oberen Austriebsfüße (18) eine größere Breite (B) als die Nut (28a) und die unteren Austriebsfüße (17) aufweisen.

6. Strickmaschine nach einem der Ansprüche 1 bis 5, **dadurch gekennzeichnet, daß** die Steuerplatinen (8) mit an den Nutenböden (15) abstützbaren, zwischen den beiden Hebelarmen (11, 12) angeordneten Lagerstellen (14) versehen sind.

7. Strickmaschine nach einem der Ansprüche 4 bis 6, **dadurch gekennzeichnet, daß** die Abstände beider Austriebsfüße (17, 18) der Steuerplatinen (8) größer als die größten Abstände der übereinander liegenden Teile der Strickkurve (28) und der Fangkurve (29) sind.

8. Strickmaschine nach einem der Ansprüche 4 bis 7, **dadurch gekennzeichnet, daß** die Strickkurve (28) und die Fangkurve (29) an einem gemeinsamen Schloßteil (27) ausgebildet sind.

9. Strickmaschine nach einem der Ansprüche 1 bis 8, **dadurch gekennzeichnet, daß** die Strickkurve (28) durch eine Nut (28a) und die Fangkurve (29) durch eine äußere Kante eines und desselben Schloßteils (27) ausgebildet sind.

10. Strickmaschine nach einem der Ansprüche 1 bis 9, **dadurch gekennzeichnet, daß** die beiden Steuermagnete (31, 32) im wesentlichen in einer gemeinsamen, senkrecht zu den Steuerplatinen (8) angeordneten Ebene liegen.

11. Strickmaschine nach einem der Ansprüche 1 bis 10, **dadurch gekennzeichnet, daß** die Andrückkurve (30) zur Einwirkung auf die oberen Austriebsfüße (18) der Steuerplatine (8) eingerichtet ist.

12. Steuerplatine (8) für eine Strickmaschine gemäss Anspruch 1, mit einer zur Vorspannung der Steuerplatine (8) bestimmten Vorspannfeder (9), wobei die Steuerplatine (8) als zweiarmigen, einen ersten und einen zweiten Hebelarm (11, 12) aufweisenden Hebel ausgebildet ist;
**dadurch gekennzeichnet,**
**daß** der zweite Hebelarm (12) der Steuerplatine (8) mit einem zum Auflaufen auf eine Strickkurve (28) bestimmten unteren Austriebsfuß (17) und einem zum Auflaufen auf die Fangkurve (29) bestimmten oberen Austriebsfuß (18) versehen ist.

13. Steuerplatine (8) nach Anspruch 12, **dadurch gekennzeichnet, daß** der obere Austriebsfuß (18) höher als der untere Austriebsfuß (17) ist.

14. Steuerplatine (8) nach Anspruch 12 oder 13, **dadurch gekennzeichnet, daß** sie mit einer an einem Nutenboden (15) abstützbare, zwischen den beiden Hebelarmen (11, 12) angeordnete .Lagerstelle (14) versehen ist.

15. Steuerplatine (8) nach einem der Ansprüche 12 bis 14, **dadurch gekennzeichnet, daß** der obere Austriebsfuß (18) eine größere Breite (B) als der untere Austriebsfuß (17) hat.

## Claims

1. Knitting machine, containing: at least one bed (1) which is provided with grooves; knitting tools (7) which are mounted displaceably in the grooves; steering sinkers (8) which are mounted displaceably and pivotably in the grooves and pretensioning springs (9) which are intended to pretension said steering sinkers, the steering sinkers (8) being assigned individually to the knitting tools (7) and being configured as two-armed levers which have respectively a first and a second lever arm (11, 12); at least one cam portion (5a, 5b) which is moveable relative to the bed (1) and has a pressure part (30) which is intended to act upon the steering sinkers (8), a knitting curve (28) and a tuck curve (29) which commences behind the knitting curve in the direction of movement; and at least one selector which is intended to control the steering sinkers (8) and has at least one first control magnet (31) which is assigned to the knitting curve (28), a second control magnet (32) which is assigned to the tuck curve (29) and a retaining magnet (33) which is disposed between the two control magnets (31, 32); the arrangement being such that, during implementation of relative movements between the bed (1) and the cam, the first lever arms (11) of the steering sinkers (8) are initially fed to the first control magnet (31) by means of the pressure part (30) and in opposition to the force of the pretensioning springs (9) and then are optionally retained or released by said first control magnet, in order to select the knitting tools (7) which are assigned to the released steering sinkers (8) for knitting, whilst the first lever arms (11) of the retained steering sinkers (8) are further retained by the retaining magnet (33), guided to the second control magnet (32) and then optionally retained or released by said second control magnet, in order to select the knitting tools (7) which are assigned to the released steering sinkers (8) for tuck and the knitting tools (7) which are assigned to the retained steering sinkers (8) for non-knitting, **characterised in that** the second lever arms (12) of the steering sinkers (8) are provided respectively with a lower ejection foot (17) which is intended to lead onto the knitting curve (28) and with an upper ejection foot (18) which is intended to lead onto the tuck curve (29).

2. Knitting machine according to claim 1, **characterised in that** the upper ejection foot (18) is higher than the lower ejection foot (17).

3. Knitting machine according to claim 1 or 2, **characterised in that** it is provided with a means for preventing leading of the upper ejection foot (18) onto the knitting curve (28).

4. Knitting machine according to one of the claims 1 to 3, **characterised in that** the tuck curve (29) is situated at least partially above the knitting curve (28) and is separated by a groove (28a) from the latter.

5. Knitting machine according to claim 4, **characterised in that** the means involves the upper ejection feet (18) having a greater width (B) than the groove (28a) and the lower ejection feet (17).

6. Knitting machine according to one of the claims 1 to 5, **characterised in that** the steering sinkers (8) are provided with bearings (14) which can be supported on the groove bases (15) and are disposed between the two lever arms (11, 12).

7. Knitting machine according to one of the claims 4 to 6, **characterised in that** the spacings of both ejection feet (17, 18) of the steering sinkers (8) are greater than the greatest spacings of the parts of the knitting curve (28) and of the tuck curve (29), which parts are situated one above the other.

8. Knitting machine according to one of the claims 4 to 7, **characterised in that** the knitting curve (28) and the tuck curve (29) are configured on a common cam part (27).

9. Knitting machine according to one of the claims 1 to 8, **characterised in that** the knitting curve (28) is configured by means of a groove (28a) and the tuck curve (29) is configured by an outer edge of one and the same cam part (27).

10. Knitting machine according to one of the claims 1 to 9, **characterised in that** the two control magnets (31, 32) are situated substantially in a common plane which is disposed perpendicularly to the steering sinkers (8).

11. Knitting machine according to one of the claims 1 to 10, **characterised in that** the pressure curve (30) is provided for acting upon the upper ejection feet (18) of the steering sinker (8).

12. Steering sinker (8) for a knitting machine according to claim 1, having a pretensioning spring (9) which is intended to pretension the steering sinker (8), the steering sinker (8) being configured as a two-armed lever which has a first and a second lever arm (11, 12),
**characterised in that**
the second lever arm (12) of the steering sinker (8) is provided with a lower ejection foot (17) which is intended to lead onto a knitting curve (28) and an upper ejection foot (18) which is intended to lead onto the tuck curve (29).

13. Steering sinker (8) according to claim 12, **characterised in that** the upper ejection foot (18) is higher than the lower ejection foot (17).

14. Steering sinker (8) according to claim 12 or 13, **characterised in that** it is provided with a bearing (14) which can be supported on a groove base (15) and is disposed between the two lever arms (11, 12).

15. Steering sinker (8) according to one of the claims 12 to 14, **characterised in that** the upper ejection foot (18) has a greater width (B) than the lower ejection foot (17).

## Revendications

1. Machine à tricoter, comprenant : au moins une fonture (1) pourvue de rainures ; des outils de tricotage (7) montés à déplacement dans les rainures ; des platines de commande (8) montées à déplacement et à pivotement dans les rainures et des ressorts de précontrainte (9) pour leur précontrainte, sachant que les platines de commande (8) sont individuellement associées aux outils de tricotage (7) et sont réalisées sous forme de leviers à deux bras présentant chacun un premier bras de levier (11) et un deuxième bras de levier (12) ; au moins une partie de cames (5a, 5b) avec un élément de pression (30) destiné à agir sur les platines de commande (8), une came de tricotage (28) et une came de cueillage (29) commençant après la came de tricotage (28) dans la direction de déplacement ; et au moins un dispositif de sélection destiné à commander les platines de commande (8) et doté d'au moins un premier aimant de commande (31) associé à la came de tricotage (28), un deuxième aimant de commande (32) associé à la came de cueillage (29) et un aimant de maintien (33) disposé entre les deux aimants de commande (31, 32) ; l'agencement étant prévu de telle sorte que, lors de l'exécution de mouvements relatifs entre la fonture (1) et la partie de cames, les premiers bras de levier (11) des platines de commande (8) sont d'abord apportés par l'élément de pression (30) et contre la force des ressorts de précontrainte (9) au premier aimant de commande (31) puis sont sélectivement maintenus bloqués ou libérés par ce dernier afin de sélectionner pour tricoter les outils de tricotage (7) associés aux platines de commande libérées (8), tandis que les premiers bras de levier (11) des platines de commande maintenues bloquées (8) continuent à être maintenus bloqués par l'aimant de maintien (33), sont dirigés vers le deuxième aimant de commande (32) puis sont sélectivement maintenus bloqués ou libérés par ce dernier, afin de sélectionner les outils de tricotage (7) associés aux platines de commande libérées (8) pour le cueillage et les outils de tricotage (7) associées aux platines de commande maintenues bloquées (8) pour l'absence de tricotage, **caractérisée en ce que** les deuxièmes bras de levier (12) des platines de commande (8) sont chacun pourvus d'un talon chasseur inférieur (17) destiné à avancer sur la came de tricotage (28) et d'un talon chasseur supérieur (18) destiné à avancer sur la came de cueillage (29).

2. Machine à tricoter selon la revendication 1, **caractérisée en ce que** le talon chasseur supérieur (18) est plus haut que le talon chasseur inférieur (17).

3. Machine à tricoter selon la revendication 1 ou 2, **caractérisée en ce qu'**elle est pourvue d'un moyen pour empêcher le talon chasseur supérieur (18) d'avancer sur la came de tricotage (28).

4. Machine à tricoter selon l'une des revendications 1 à 3, **caractérisée en ce que** la came de cueillage (29) se trouve au moins partiellement au-dessus de la came de tricotage (28) et en est séparée par une rainure (28a).

5. Machine à tricoter selon la revendication 4, **caractérisée en ce que** le moyen consiste **en ce que** les talons chasseurs supérieurs (18) présentent une plus grande largeur (B) que la rainure (28a) et que les talons chasseurs inférieurs (17).

6. Machine à tricoter selon l'une des revendications 1 à 5, **caractérisée en ce que** les platines de commande (8) sont dotées de points d'appui (14) pouvant s'appuyer sur les fonds de rainure (15) et disposés entre les deux bras de levier (11, 12).

7. Machine à tricoter selon l'une des revendications 4 à 6, **caractérisée en ce que** les distances entre les deux talons chasseurs (17, 18) des platines de commande (8) sont plus grandes que les distances maximales entre les éléments superposés de la came de tricotage (28) et de la came de cueillage (29).

8. Machine à tricoter selon l'une des revendications 4 à 7, **caractérisée en ce que** la came de tricotage (28) et la came de cueillage (29) sont formées sur un élément de cames commun (27).

9. Machine à tricoter selon l'une des revendications 1 à 8, **caractérisée en ce que** la came de tricotage (28) est formée par une rainure (28a) et la came de cueillage (29) par une arête extérieure d'un seul et même élément de cames (27).

10. Machine à tricoter selon l'une des revendications 1 à 9, **caractérisée en ce que** les deux aimants de commande (31, 32) se trouvent essentiellement dans un plan commun, disposé perpendiculairement aux platines de commande (8).

11. Machine à tricoter selon l'une des revendications 1 à 10, **caractérisée en ce que** la came de pression (30) est conçue pour agir sur les talons chasseurs supérieurs (18) des platines de commande (8).

12. Platine de commande (8) pour une machine à tricoter selon la revendication 1, avec un ressort de précontrainte (9) pour la précontrainte de la platine de commande (8), sachant que la platine de commande (8) est réalisée sous forme de levier à deux bras présentant un premier bras de levier (11) et un deuxième bras de levier (12) ; **caractérisée en ce que** le deuxième bras de levier (12) de la platine de commande (8) est doté d'un talon chasseur inférieur (17) destiné à avancer sur une came de tricotage (28) et d'un talon chasseur supérieur (18) destiné à avancer sur la came de cueillage (29).

13. Platine de commande (8) selon la revendication 12, **caractérisée en ce que** le talon chasseur supérieur (18) est plus haut que le talon chasseur inférieur (17).

14. Platine de commande (8) selon la revendication 12 ou 13, **caractérisée en ce qu'**elle est dotée d'un point d'appui (14) pouvant s'appuyer sur un fond de rainure (15) et disposé entre les deux bras de levier (11, 12).

15. Platine de commande (8) selon l'une des revendications 12 à 14, **caractérisée en ce que** le talon chasseur supérieur (18) possède une plus grande largeur (B) que le talon chasseur inférieur (17).
